(19) Europäisches Patentamt
European Patent Office
Office européen des brevets

(11) **EP 2 701 437 B1**

(12) **EUROPEAN PATENT SPECIFICATION**

(45) Date of publication and mention
of the grant of the patent:
**20.12.2017 Bulletin 2017/51**

(21) Application number: **12782087.6**

(22) Date of filing: **20.04.2012**

(51) Int Cl.:
*H04W 52/04* (2009.01)          *H04L 1/00* (2006.01)
*H04L 5/00* (2006.01)          *H04W 72/04* (2009.01)
*H04W 72/12* (2009.01)

(86) International application number:
**PCT/CN2012/074422**

(87) International publication number:
**WO 2012/152177 (15.11.2012 Gazette 2012/46)**

(54) **CHANNEL QUALITY PROCESSING METHOD AND DEVICE**

VERFAHREN UND VORRICHTUNG ZUR BEARBEITUNG EINER KANALQUALITÄT

PROCÉDÉ ET DISPOSITIF DE TRAITEMENT DE QUALITÉ DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2011 CN 201110122921**

(43) Date of publication of application:
**26.02.2014 Bulletin 2014/09**

(73) Proprietor: **Huawei Technologies Co., Ltd.
Longgang District
Shenzhen, Guangdong 518129 (CN)**

(72) Inventor: **LIU, Qi
Shenzhen, Guangdong 518129 (CN)**

(74) Representative: **Thun, Clemens
Mitscherlich PartmbB
Patent- und Rechtsanwälte
Sonnenstraße 33
80331 München (DE)**

(56) References cited:
WO-A1-2008/143566       WO-A1-2011/000420
CN-A- 101 084 640       CN-A- 101 431 791
CN-A- 101 442 345       CN-A- 102 186 230
US-A1- 2010 067 396

**Description**

**TECHNICAL FIELD**

The present invention relates to the field of communications technologies, and in particular, to a method and an apparatus for processing channel quality.

**BACKGROUND**

Channel quality (Channel Quality) assessment processing is widely applied in the communications field. High speed data packet access (High Speed Data Packet Access, HSDPA) that is introduced since Third Generation Partnership Project (Third Generation Partnership Project, 3GPP) R5 is used as an example hereinafter. In HSDPA, a network side transfers data to a user over a high speed-physical downlink shared channel (HS-PDSCH), and uses a high-speed shared control channel (High Speed Sharing Control Channel, HS-SCCH) as a control channel of the high speed-physical downlink shared channel (High Speed Physical Downlink Shared Channel, HS-PDSCH) to indicate HS-PDSCH-related control information. A UE side uses an uplink high-speed dedicated physical control channel (High Speed Dedicated Physical Control Channel, HS-DPCCH) to report a channel quality indicator (Channel Quality Indicator, CQI) value to the network side, thereby indicating a current channel environment where the user equipment (User Equipment, UE) resides.

The protocol defines 30 CQI values. Each CQI value indicates a combination of a transport block set (Transport Block Set, TBS), the number of channels, and a modulation mode. When the UE reports a CQI value, it indicates that the network may, under a current channel condition, use the combination of a TBS, the number of channels, and a modulation mode indicated by the CQI value to ensure that the UE receives the TBS at a block error rate (Block Error Rate, BLER) of 10% over an additive white Gaussian noise (Additive White Gaussian Noise, AWGN) channel. Because the probability of receiving a TBS correctly is related to a received signal noise ratio (Signal Noise Ratio, SNR), the CQI value may be mapped to a combination of a TBS, the number of channels, and a modulation mode, and may further correspond to a determinable SNR value. By increasing transmit power, an SNR value may be increased and a size of the TBS may be enlarged.

With respect to the HSDPA technology and a high-speed packet access evolution (High Speed Packet Access Evolution, HSPA+) enhanced technology upon which the HSDPA depends, the UE side needs to use a CQI value to indicate a current channel condition for the network side. The CQI value represents a demodulation SNR under a specific channel condition. There is determinable correspondence between the CQI value and the SNR. For example, when a quantization step of a CQI value is 1dB, the SNR increases by 1dB every time the CQI value increases by one level.

The downlink channel and uplink control channel used by the HSDPA technology and the HSPA+ enhanced technology upon which the HSDPA depends are as follows: a dedicated physical channel (Dedicated Physical Channel, DPCH) or a fractional dedicated physical channel (Fractional Dedicated Physical Channel, F-DPCH) is used to send a downlink transmit power control (Transmit Power Control, TPC) command, and a UE controls and adjusts transmit power of an uplink DPCCH according to the TPC command. The uplink DPCCH is used to send an uplink TPC command, and the network side receives the command and uses it to adjust transmit power of the DPCH or F-DPCH channel. In the aforesaid technology, the TPC commands transferred by the DPCH/F-DPCH and the DPCCH channel together implement a closed-loop power control for an air interface. A control objective of the uplink TPC command is to enable a received SNR of the downlink DPCH and F-DPCH channels to converge at a target value DPCH SNRtarget, where the target value may be designated by a higher layer.

The HS-DPCCH channel is used by the UE side to report a CQI value obtained by the UE through measurement. A mode of periodic reporting is generally used, where a CQI value is reported at intervals of n transmission time intervals (Transmission Time Interval, TTI). If the CQI value is reported too frequently, load on the uplink channel is increased; if the CQI value is rarely reported, the UE channel condition obtained on the network side is inaccurately indicated. There is a time delay due to reasons such as the measurement and the periodic reporting, where the delay may cause the CQI value which is a reference for HSDPA scheduling on the network side to be inconsistent with the current channel condition of the UE. This decreases the transmission rate of user data, degrades the quality of service (Quality of Service, QoS) for a service, and reduces the air interface capacity of a system.

WO 2011/000420 A1 discloses adjusting channel quality report in a wireless communication network. In the method disclosed in this prior art, at first, a second communication node establishes a channel quality report. The channel quality report may be a channel quality indicator value reflecting rapid changes in the radio propagation environment. Then, the second communication node sends the channel quality report to a first communication node. The first communication node obtains at least one channel characteristic parameter. The first communication node determines a channel quality offset based on the obtained channel characteristic parameter wherein the offset may be used to adjust a reported channel quality. The offset may be expressed as a received quality adjustment factor CQIoffset which may be expressed as a function of deviation from a "expected CQI", CQIdev, the age of the CQI value, i.e. the CQI delay, TCQIrx and the channel coherence time.

## SUMMARY

Various aspects of the present invention disclose a method and an apparatus for processing channel quality, to increase the transmission rate of user data, improve the QoS for a service, and increase the air interface capacity of a system on the prerequisite of lessening load on an uplink channel.

In one aspect, the present invention discloses a method for processing channel quality, including: receiving a channel quality indicator (CQI) value sent by a user equipment, and compensating the received CQI value by using a channel parameter related to channel quality of the user equipment, to enable a signal noise ratio of a channel of the user equipment to converge at a target value.
wherein the compensating the received CQI value by using the channel parameter related to the channel quality of the user equipment, to enable the signal noise ratio of the user equipment to converge at the target value comprises:

obtaining the channel parameter related to the channel quality of the user equipment;

calculating a variation of the channel parameter between a moment when the CQI value is sent and a current moment when the CQI value is used; and

compensating the received CQI value by using the variation, to enable the signal noise ratio of the user equipment to converge at the target value, wherein the obtaining the channel parameter related to the channel quality of the user equipment comprises:

obtaining power of a physical channel of the user equipment, wherein the physical channel comprises at least one of a downlink physical channel, a fractional downlink physical channel, a dedicated physical data channel, and a fractional dedicated physical channel, wherein the calculating the variation of the channel parameter between the moment when the CQI value is sent and the moment when the CQI value is used comprises:

calculating a power variation of the physical channel, wherein the variation is a difference between power of the physical channel under a first set condition at a moment when the CQI value is received and power of the physical channel under a second set condition at the current moment; and

the compensating the received CQI value by using the variation, to enable the signal noise ratio of the user equipment to converge at the target value comprises:

performing data transmission scheduling according to a sum of the received CQI value and the variation.

In another aspect, the present invention discloses an apparatus for processing channel quality, including: a receiving unit, configured to receive a channel quality indicator (CQI) value sent by a user equipment, and a compensating unit, configured to compensate the received CQI value by using a channel parameter related to channel quality of the user equipment, to enable a signal noise ratio of a channel of the user equipment to converge at a target value, wherein the compensating unit comprises:

a parameter obtaining unit, configured to obtain the channel parameter related to the channel quality of the user equipment;
a calculating unit, configured to calculate a variation of the channel parameter between a moment when the CQI value is sent and a current moment when the CQI value is used; and
a compensating subunit, configured to compensate the received CQI value by using the variation, to enable the signal noise ratio of the user equipment to converge at the target value, wherein
the parameter obtaining unit is specifically configured to obtain power of a physical channel of the user equipment, wherein the physical channel comprises at least one of a downlink physical channel, a fractional downlink physical channel, a dedicated physical data channel, and a fractional dedicated physical channel,
wherein the calculating unit is specifically configured to calculate a power variation of the physical channel, wherein the variation is a difference between power of the physical channel under a first set condition at a moment when the CQI value is received and power of the physical channel under a second set condition at the current moment; and
the compensating subunit is specifically configured to perform data transmission scheduling according to a sum of the received CQI value and the variation.

According to the above description, the solution of the embodiments of the present invention can lessen load on an uplink channel and reduce a delay, thereby increasing the transmission rate of user data, improving the QoS for a service, and increasing the air interface capacity of a system.

**BRIEF DESCRIPTION OF DRAWINGS**

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic flowchart of a method for processing channel quality according to an embodiment of the present invention;

FIG. 2 is a schematic diagram of a 3GPP HSDPA network scenario according to an embodiment of the present invention;

FIG. 3 is a schematic flowchart of another method for processing channel quality according to an embodiment of the present invention;

FIG. 4 is a schematic diagram illustrating reporting and use of a CQI according to an embodiment of the present invention;

FIG. 5 is a schematic structural diagram of an apparatus for processing channel quality according to an embodiment of the present invention;

FIG. 6 is a schematic structural diagram of another apparatus for processing channel quality according to an embodiment of the present invention; and

FIG. 7 is a schematic structural diagram of another apparatus for processing channel quality according to an embodiment of the present invention.

**DESCRIPTION OF EMBODIMENTS**

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Technologies described herein may be applied to various radio communications systems, such as a current 2G or 3G communications system and a next generation communications system, for example, a global system for mobile communications (GSM, Global System for Mobile communications), a code division multiple access (CDMA, Code Division Multiple Access) system, a time division multiple access (TDMA, Time Division Multiple Access) system, a wideband code division multiple access (WCDMA, Wideband Code Division Multiple Access) system, a frequency division multiple access (FDMA, Frequency Division Multiple Access) system, an orthogonal frequency-division multiple access (OFDMA, Orthogonal Frequency-Division Multiple Access) system, a single-carrier FDMA (SC-FDMA) system, a general packet radio service (GPRS, General Packet Radio Service) system, a long-term evolution (LTE, Long Term Evolution) system, and other communications systems of the like.

The various aspects herein are described with reference to a terminal and/or a base station and/or a base station controller.

In addition, the term "system" and "network" may generally be used interchangeably herein. The term "and/or" herein merely describes an association relationship between associated objects, indicating that three types of relationships may exist, for example, A and/or B may represent three cases where only A exists, both A and B exist, and only B exists. In addition, the symbol "/" herein generally represents an "or" relationship between associated objects before and after "/".

It should be noted first that a radio access network element referred to in the embodiments of the present invention is an entity that is able to implement a function of radio access management for a user equipment, where the radio access network element may have different names, locations, and product forms in different networks.

For example, a radio access network element mentioned in the following embodiments of the present invention may, for example, refer to: an evolved base station (eNodeB), a home base station (HeNB), or a base station of any other type in an evolved universal mobile telecommunications system (UMTS, Universal Mobile Telecommunications System) territorial radio access network (E-UTRAN, Evolved UMTS Territorial Radio Access Network); or an entity having an access network logical function of a high rate packet data access network (HRPD-AN, High Rate Packet Data Access Network) in a code division multiple access (CDMA, Code Division Multiple Access) network; or an entity having an access network logical function of an evolved packet data gateway (EPDG, Evolved Packet Data Gateway) in a wireless local area network (WLAN, Wireless Local Area network); or an access service network base station (ASN-BS, Access Service Network Base Station) in a worldwide interoperability for microwave access (WiMAX, Worldwide Interoperability for Microwave Access) network; or an entity implementing a function of radio access management for a user equipment in any other network.

Specific embodiments are described in detail hereinafter.

One embodiment of a method for processing channel quality according to the present invention may include: receiving a channel quality indicator (CQI) value sent by a user equipment; and compensating the received CQI value by using a channel parameter related to the channel quality of the user equipment, to enable a signal noise ratio of a channel of the user equipment to converge at a target value.

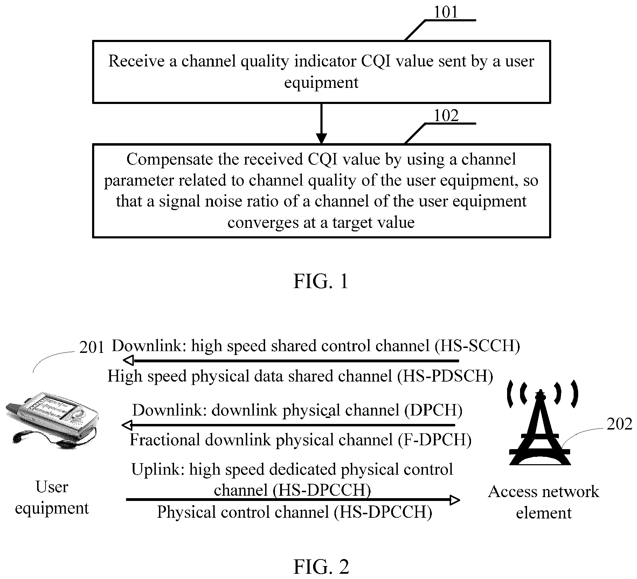

Referring to FIG. 1, a method for processing channel quality may include the following specific steps:

101. A radio access network element receives a channel quality indicator (CQI) value sent by a user equipment.

102. The radio access network element compensates the received CQI value by using a channel parameter related to channel quality of the user equipment, to enable a signal noise ratio of a channel of the user equipment to converge at a target value (where the target value may be understood as an actual value).

The channel parameter may be a relevant parameter of a downlink physical channel, a fractional downlink physical channel, a dedicated physical data channel (Dedicated Physical Data Channel, DPDCH), a fractional dedicated physical channel (fractional DPCH), a received signal code power (Received Signal Code Power, RSCP), or an average energy/average power spectrum density (Ec/N0) of a time slot. The above parameter examples shall not be understood as exhaustive for "a channel parameter related to channel quality of a user equipment". Therefore, the examples shall not be understood as a limit to the embodiment of the present invention.

According to the above description, in the embodiment of the present invention, the radio access network element compensates the received CQI value by using the channel parameter related to the channel quality of the user equipment, which ensures accuracy of the CQI value in cases of a long CQI reporting period, thereby lessening the load on the uplink channel. Moreover, channel control may be performed without using the CQI value reported by the UE, which avoids a delay caused by the periodic reporting and the measurement, thereby increasing the transmission rate of user data, improving the QoS for a service, and increasing the air interface capacity of a system.

For example, the compensating the received CQI value by using the channel parameter related to the channel quality of the user equipment, to enable the signal noise ratio of the user equipment to converge at the target value includes: obtaining the channel parameter related to the channel quality of the user equipment and calculating a variation of the channel parameter between a moment when the CQI value is sent and a current moment when the CQI value is used; and compensating the received CQI value by using the variation, to enable the signal noise ratio of the user equipment to converge at the target value.

For example, the obtaining the channel parameter related to the channel quality of the user equipment includes obtaining power of a physical channel of the user equipment, where the physical channel includes at least one of a downlink physical channel, a fractional downlink physical channel, a dedicated physical data channel, and a fractional dedicated physical channel.

The calculating the variation of the channel parameter between the moment when the CQI value is sent and the current moment when the CQI value is used includes: calculating a variation of the power of the physical channel, where the variation is a difference between power of the physical channel under a first set condition at a moment when the CQI value is received and power of the physical channel under a second set condition at the current moment.

The compensating the received CQI value by using the variation to enable the signal noise ratio of the user equipment to converge at the target value includes performing data transmission scheduling by using a sum of the received CQI value and the variation.

For example, the power of the physical channel under the first set condition at the moment when the CQI value is received includes: power of the physical channel at a moment that is prior to the moment when the CQI value is received by a first set time, or an average value of the power of the physical channel within a second set time prior to the moment when the CQI value is received; and the power of the physical channel at the current moment under the second set condition includes an average value of the power of the physical channel within a period between a moment that is prior to the current moment by a third set time and the current moment. The "first set time", "second set time", and "third set time" are merely used to differentiate three set times, where a specific time value may be set according to actual requirements, and the embodiment of the present invention sets no limit thereto.

In order to further improve accuracy of data scheduling, after the channel quality indicator (CQI) value sent by the user equipment is received, the method may further include: obtaining a deviation value corresponding to the received CQI value, where a defined CQI value is used as a benchmark, a CQI value having a greater absolute value of a difference with the benchmark corresponds to a deviation value having a greater absolute value, a CQI value smaller than the benchmark has a negative deviation value, and a greater CQI value has a greater deviation value.

The performing data transmission scheduling according to a sum of the received CQI value and the variation includes performing data transmission scheduling according to a sum of the received CQI value, the variation, and the deviation value.

The following method embodiment describes the method according to the embodiment of the present invention by using a 3GPP HSDPA application scenario as an example. It should be noted that the method according to the embodiment of the present invention may also be applied to any network scenario where a UE needs to report a CQI value and inaccurate reporting of a CQI value causes performance deterioration, and the embodiment of the present invention sets no limit thereto.

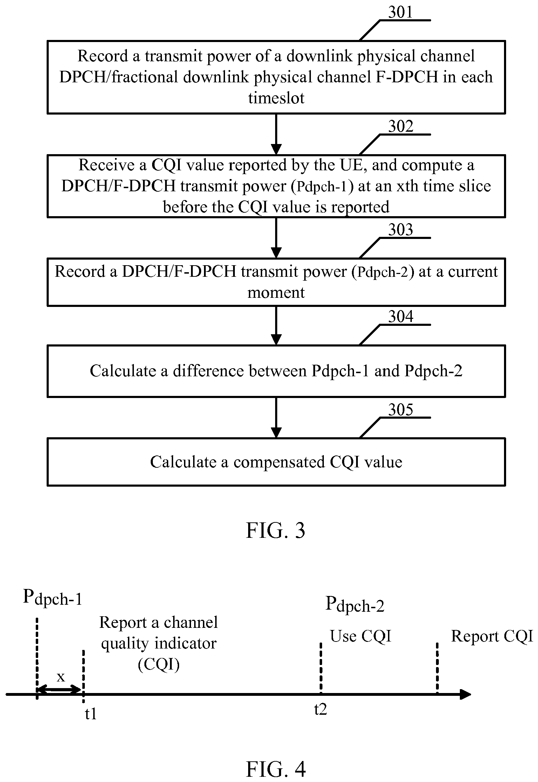

As shown in FIG. 2 and FIG. 3, FIG. 2 is a schematic diagram of a 3GPP HSDPA network scenario, and FIG. 3 is a method flowchart. As shown in FIG. 2, an arrow direction indicates a transmission direction of data or signaling, where a downlink (Downlink) includes an HS-SCCH, an HS-PDSCH, a DPCH, or an F-DPCH; and an uplink (Uplink) includes a DPCCH or an HS-DPCCH. A user equipment 201 and a base station 202 perform data and signaling exchange by using the uplink and the downlink.

The UE needs to report a CQI value to a NodeB over an HS-DPCCH channel. The downlink DPCH or F-DPCH is used to send a downlink TPC command , and the UE controls and adjusts transmit power of the uplink DPCCH according to the TPC command. The uplink DPCCH is used to send an uplink TPC command, and a network side receives the command and uses it to adjust transmit power of the downlink DPCH or F-DPCH channel. A control objective of the uplink TPC command is to enable a received SNR of the downlink DPCH and F-DPCH channels to converge at a target value DPCH SNRtarget, where the target value may be designated by a higher layer.

The base station obtains an HSDPA CQI value reporting period configured by a radio network controller (RNC), and periodically detects and demodulates a CQI value reported by the UE over the HS-DPCCH channel.

301. The NodeB records transmit power of the downlink DPCH/F-DPCH in each timeslot.

An accompanied dedicated physical control channel DPCH/F-DPCH is required when the HSDPA is in use. The power of the DPCH/F-DPCH is controlled by the UE. When an SNR value of the downlink DPCH/F-DPCH is greater than a target SNR, a TPC command DOWN is returned in an uplink; otherwise, a TPC command UP is returned. The SNR received by a downlink may be adjusted to approximate the target SNR by using the TPC command. Therefore, the transmit power of the downlink DPCH/F-DPCH is a variable value.

302. The NodeB, upon receiving a CQI value reported by the UE, calculates a DPCH/F-DPCH transmit power in an xth preceding timeslot before the CQI value is reported, and records the transmit power as Pdpch-1;

where, x is a positive integer. For example, x = 1, 2, or 3. A moment corresponding to the xth preceding timeslot is equal to or approximately equal to a moment estimated by the NodeB when the UE measures the CQI value.

303. When needing to schedule data transmitted by the UE, the NodeB needs to make reference to the CQI value of the UE, and therefore the NodeB records a DPCH/F-DPCH transmit power at a current moment, and records the transmit power as Pdpch-2.

304. Calculate a difference $\Delta_{\text{DPCH/F-DPCH}}$ between the Pdpch-1 and the Pdpch-2.

305. Calculate a compensated CQI value.

By comparing the DPCH/F-DPCH transmit power at each moment when the UE measures the CQI value with the DPCH/F-DPCH transmit power at the current moment, the NodeB obtains a difference, which helps estimate a downlink channel condition, thereby compensating the CQI value. Equation (1) may be referred to as a calculation equation for compensating the CQI value in step 305:

$$CQI_{\text{Current moment}} = CQI_{\text{UE report}} + \Delta_{\text{DPCH/F-DPCH}} \tag{1}$$

By compensating the CQI value as above, the downlink DPCH/F-DPCH may be used to assist in implementing estimation of the channel quality within a period between two times of reporting of the CQI value by the UE, thereby improving the accuracy of the CQI value.

The NodeB, upon receiving the CQI value reported by the UE over the HS-DPCCH channel, records the transmit power Pdpch-1 of the downlink DPCH/F-DPCH channel; when it is necessary to perform scheduling and air interface resource allocation with reference to the CQI value, the NodeB records the transmit power Pdpch-2 of the DPCH/F-DPCH at the current moment; uses a power difference between Pdpch-2 and Pdpch-1 as an estimated deviation of the CQI value between the reporting moment and the current moment and compensates the CQI value by using the power difference; and may then use the compensated CQI value as a reference for HSDPA scheduling. The NodeB performs scheduling with reference to the compensated CQI value.

Preferably, a solution for calculating a difference between Pdpch-1 and Pdpch-2 in step 304 of the embodiment may be as follows: for a method for estimating the channel deviation between the moment when the CQI is reported and the moment when the CQI is used, reference may be made to the number of UPs and DOWNs in uplink TPC commands. Assuming that UP is 1 and DOWN is -1, then, a deviation equals a sum of UP and DOWN multiplied by a TPC step. A specific example is shown in FIG. 4, where a UE executes CQI reporting, and a base station executes Pdpch-2 and Pdpch-1 recording. Between a moment t1 when a CQI is last reported and a current moment t2 when the CQI is used, the NodeB receives 60 UPs and 30 DOWNs of TPC commands in total over an uplink DPCCH, where a TPC command adjustment step configured by an RNC is 0.25dB. Therefore, a deviation between Pdpch-2 and Pdpch-1 is (60*1+30*(-1))*0.25dB=7.5dB.

Preferably, an SNR value that is converted into a channel quality deviation may be calculated by using a defined equation. For a specific calculation equation, reference may be made to equation (2):

$$SNR = \Box DPCH/F\text{-}DPCH - \alpha \qquad (2)$$

where $\alpha$ is a constant value, and may be determined by using a pre-defined table or fixed configuration, where Table 1 may be referenced.

**Table 1**

| CQI value reported by a UE | $\alpha$ |
|---|---|
| 1 | -3 |
| ... | |
| 20 | -1 |
| 21 | 0 |
| 22 | 1 |
| ... | |
| 30 | 3 |

For example, it is known that a deviation value of a DPCH is 7.5dB. Assuming that the CQI $_{report}$ reported by a UE is 20, then $\alpha$ is -1dB. The deviation delta of SNR is 7.5+1=8.5dB; then, at the moment when the CQI is used, the actual channel condition of the user is CQI report + 8.5dB.

The embodiment of the present invention relieves a problem of performance deterioration caused by a channel condition change between a moment when a UE reports a CQI and a moment when the CQI is used for scheduling. It decreases a CQI reporting period to weaken impact on the load on an uplink channel and may even discard the periodic CQI reporting. This ensures and even improves performance of the HSPDA.

It should be noted that, for ease of description, the foregoing method embodiments are described as combinations of a series of actions; however, persons skilled in the art should understand that the present invention is not limited to the sequence of the aforesaid actions. According to the present invention, some steps may be performed in other sequences or simultaneously. In addition, persons skilled in the art should also understand that the embodiments described herein are exemplary embodiments, and the actions and modules involved therein are not necessarily mandatory in the present invention.

In order to better implement the technical solution according to embodiments of the present invention, a relevant apparatus for implementing the method embodiments is further provided as follows.

An apparatus for processing channel quality may be a base station (NodeB), or an access network element of any other type on a network, which is not limited by the embodiment of the present invention.

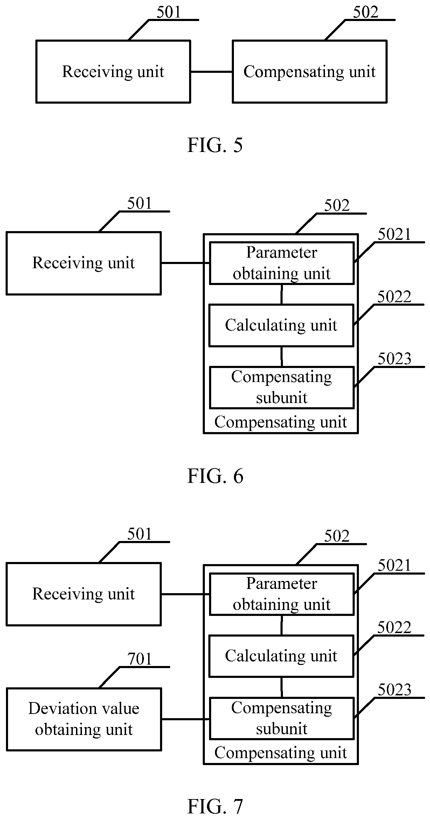

As shown in FIG. 5, the channel quality processing apparatus for processing channel quality includes a receiving unit 501 and a compensating unit 502.

The receiving unit 501 is configured to receive a channel quality indicator (CQI) value sent by a user equipment.

The compensating unit 502 is configured to compensate the received CQI value by using a channel parameter related to channel quality of the user equipment, to enable a signal noise ratio of a channel of the user equipment to converge at a target value.

Alternatively, as shown in FIG. 6, the compensating unit 502 may include a parameter obtaining unit 5021, a calculating unit 5022, and a compensating subunit 5023.

The parameter obtaining unit 5021 is configured to obtain the channel parameter related to the channel quality of the user equipment.

The calculating unit 5022 is configured to calculate a variation of the channel parameter between a moment when the CQI value is sent and a current moment when the CQI value is used.

The compensating subunit 5023 is configured to compensate the received CQI value by using the variation, to enable the signal noise ratio of the user equipment to converge at the target value.

Alternatively, the parameter obtaining unit 5021 is specifically configured to obtain power of a physical channel of the user equipment, where the physical channel includes at least one of a downlink physical channel, a fractional downlink physical channel, a dedicated physical data channel, and a fractional dedicated physical channel.

The calculating unit 5022 is specifically configured to calculate a power variation of the physical channel, where the variation is a difference between power of the physical channel under a first set condition at a moment when the CQI value is received and power of the physical channel under a second set condition at the current moment.

The compensating subunit 5023 is specifically configured to perform data transmission scheduling according to a sum of the received CQI value and the variation.

More specifically, the power of the physical channel under the first set condition at the moment when the CQI value is received includes power of the physical channel at a moment that is prior to the moment when the CQI value is received by a first set time, or an average value of the power of the physical channel within a second set time prior to the moment when the CQI value is received.

The power of the physical channel under the second set condition at the current moment includes an average value of the power of the physical channel within a period between a moment that is prior to the current moment by a third set time and the current moment

Further, as shown in FIG. 7, the channel quality processing apparatus further includes a deviation value obtaining unit 701, configured to, after the channel quality indicator (CQI) value sent by the user equipment is received, obtain a deviation value corresponding to the received CQI value, where a defined CQI value is used as a benchmark, a CQI value having a greater absolute value of a difference with the benchmark corresponds to a deviation value having a greater absolute value, a CQI value smaller than the benchmark has a negative deviation value, and a greater CQI value has a greater deviation value.

The compensating subunit 5023 is specifically configured to perform data transmission scheduling according to a sum of the received CQI value, the variation, and the deviation value.

In the embodiment of the present invention, the received CQI value is compensated by using the channel parameter related to the channel quality of the user equipment, which ensures accuracy of the CQI value in cases of a long CQI reporting period, thereby lessening the load on the uplink channel. Moreover, channel control may be performed without using the CQI value reported by the UE, which avoids a delay caused by the periodic reporting and the measurement, thereby increasing the transmission rate of user data, improving the QoS for a service, and increasing the air interface capacity of a system.

It may be clearly understood by a person skilled in the art that, for the purpose of convenient and brief description, for a detailed working process of the foregoing system, apparatus and unit, reference may be made to the corresponding process in the foregoing method embodiments, and the details will not be repeated herein again.

In the several embodiments provided in the present application, it should be understood that the disclosed system, apparatus, and method may be implemented in other manners. For example, the described apparatus embodiment is merely exemplary. For example, the unit division is merely a type of logical function division and may have other division manners in actual implementation. For example, a plurality of units or components may be combined or integrated into another system, or some features may be ignored or not executed. In addition, the displayed or discussed mutual couplings or direct couplings or communication connections may be implemented through some interfaces. The indirect couplings or communication connections between the channel quality processing apparatuses or units may be implemented in electronic, mechanical or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, each functional unit in the embodiments of the present invention may be integrated into one processing unit, or each unit may exist alone physically, or two or more units may be integrated into one unit. The integrated unit may be implemented in a form of hardware, or may be implemented in a form of a software functional unit.

When implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash disk, a removable hard disk, a read-only memory (Read-Only Memory, ROM), a random access memory (Random Access Memory, RAM), a magnetic disk, or an optical disc.

According to the above description, the above embodiments are merely provided for describing the technical solutions of the present invention, but not intended to limit thereto. It should be understood by persons of ordinary skill in the art that although the present invention has been described in detail with reference to the embodiments, modifications may be made to the technical solutions described in the embodiments, or equivalent replacements may be made to some technical features in the technical solutions; however, such modification or replacement does not make the essence of corresponding technical solutions exceed scope of the technical solutions according to the embodiments of the present invention.

**Claims**

1. A method for processing channel quality comprising:

   receiving (101) a channel quality indicator, CQI, value sent by a user equipment, and
   compensating (102) the received CQI value by using a channel parameter related to channel quality of the user equipment, to enable a signal noise ratio of a channel of the user equipment to converge at a target value, wherein the compensating the received CQI value by using the channel parameter related to the channel quality of the user equipment, to enable the signal noise ratio of the user equipment to converge at the target value comprises:

      obtaining the channel parameter related to the channel quality of the user equipment;
      calculating a variation of the channel parameter between a moment when the CQI value is sent and a current moment when the CQI value is used; and
      compensating the received CQI value by using the variation, to enable the signal noise ratio of the user equipment to converge at the target value, wherein the obtaining the channel parameter related to the channel quality of the user equipment comprises:

         obtaining power of a physical channel of the user equipment, wherein the physical channel comprises at least one of a downlink physical channel, a fractional downlink physical channel, a dedicated physical data channel, and a fractional dedicated physical channel, wherein the calculating the variation of the channel parameter between the moment when the CQI value is sent and the moment when the CQI value is used comprises:

            calculating a power variation of the physical channel, wherein the variation is a difference between power of the physical channel under a first set condition at a moment when the CQI value is received and power of the physical channel under a second set condition at the current moment; and
            the compensating the received CQI value by using the variation, to enable the signal noise ratio of the user equipment to converge at the target value comprises:

               performing data transmission scheduling according to a sum of the received CQI value and the variation.

2. The method according to claim 1, wherein,
   the power of the physical channel under the first set condition at the moment when the CQI value is received comprises power of the physical channel at a moment that is prior to the moment when the CQI value is received by a first set time, or an average power value of the physical channel within a second set time prior to the moment when the CQI value is received; and
   the power of the physical channel under the second set condition at the current moment comprises an average power value of the physical channel within a period between a moment that is prior to the current moment by a third set time and the current moment.

3. The method according to claim 1 or 2, wherein after the receiving the channel quality indicator, CQI, value sent by the user equipment, the method further comprises:

obtaining a deviation value corresponding to the received CQI value, wherein a defined CQI value is used as a benchmark, wherein a CQI value larger than the benchmark corresponds to a positive deviation value and a CQI value smaller than the benchmark corresponds to a negative deviation value; and
the performing data transmission scheduling according to the sum of the received CQI value and the variation comprises:

performing data transmission scheduling according to a sum of the received CQI value, the variation, and the deviation value.

4. A apparatus for processing channel quality comprising:

a receiving unit (501), configured to receive a channel quality indicator, CQI, value sent by a user equipment, and a compensating unit (502), configured to compensate the received CQI value by using a channel parameter related to channel quality of the user equipment, to enable a signal noise ratio of a channel of the user equipment to converge at a target value, wherein the compensating unit (502) comprises:

a parameter obtaining unit (5021), configured to obtain the channel parameter related to the channel quality of the user equipment;
a calculating unit (5022), configured to calculate a variation of the channel parameter between a moment when the CQI value is sent and a current moment when the CQI value is used; and
a compensating subunit (5023), configured to compensate the received CQI value by using the variation, to enable the signal noise ratio of the user equipment to converge at the target value, wherein

the parameter obtaining unit (5021) is specifically configured to obtain power of a physical channel of the user equipment, wherein the physical channel comprises at least one of a downlink physical channel, a fractional downlink physical channel, a dedicated physical data channel, and a fractional dedicated physical channel, wherein
the calculating unit (5022) is specifically configured to calculate a power variation of the physical channel, wherein the variation is a difference between power of the physical channel under a first set condition at a moment when the CQI value is received and power of the physical channel under a second set condition at the current moment; and
the compensating subunit (5023) is specifically configured to perform data transmission scheduling according to a sum of the received CQI value and the variation.

5. The apparatus according to claim 4, wherein
the power of the physical channel under the first set condition at the moment when the CQI value is received comprises power of the physical channel at a moment that is prior to the moment when the CQI value is received by a first set time, or an average value of power of the physical channel within a second set time prior to the moment when the CQI value is received; and
the power of the physical channel under the second set condition at the current moment comprises an average power value of the physical channel within a period between a moment that is prior to the current moment by a third set time and the current moment.

6. The apparatus according to claim 4 or 5, further comprising:

a deviation value obtaining unit (701), configured to, after the channel quality indicator, CQI, value sent by the user equipment is received, obtain a deviation value corresponding to the received CQI value, wherein a defined CQI value is used a benchmark, wherein a CQI value larger than the benchmark corresponds to a positive deviation value and a CQI value smaller than the benchmark corresponds to a negative deviation value; wherein:

the compensating subunit (5023) is specifically configured to perform data transmission scheduling according to a sum of the received CQI value, the variation, and the deviation value.

7. A computer readable medium comprising a computer program stored in a non-transitory medium that, when executed by a computer unit, will cause the computer unit to perform the steps of a machine according to any one of claims 1 to 3.

**Patentansprüche**

1. Verfahren zum Verarbeiten einer Kanalqualität, das Folgendes umfasst:

Empfangen (101) eines Kanalqualitätsindikator- bzw. CQI-Wertes (CQI: Channel Quality Indicator), der durch eine Benutzerausrüstung gesendet wird, und

Kompensieren (102) des empfangenen CQI-Wertes durch Verwenden eines Kanalparameters, der mit der Kanalqualität der Benutzerausrüstung in Verbindung steht, um zu ermöglichen, dass ein Signal-Rausch-Verhältnis eines Kanals der Benutzerausrüstung zu einem Zielwert konvergiert, wobei das Kompensieren des empfangenen CQI-Wertes durch Verwenden des Kanalparameters, der mit der Kanalqualität der Benutzerausrüstung in Verbindung steht, um zu ermöglichen, dass das Signal-Rausch-Verhältnis der Benutzerausrüstung zu dem Zielwert konvergiert, Folgendes umfasst:

Erhalten des Kanalparameters, der mit der Kanalqualität der Benutzerausrüstung in Verbindung steht;
Berechnen einer Variation des Kanalparameters zwischen einem Zeitpunkt, wenn der CQI-Wert gesendet wird, und einem augenblicklichen Zeitpunkt, wenn der CQI-Wert verwendet wird; und
Kompensieren des empfangenen CQI-Wertes durch Verwenden der Variation, um zu ermöglichen, dass das Signal-Rausch-Verhältnis der Benutzerausrüstung zu dem Zielwert konvergiert, wobei das Erhalten des Kanalparameters, der mit der Kanalqualität der Benutzerausrüstung in Verbindung steht, Folgendes umfasst:

Erhalten einer Leistung eines physischen Kanals der Benutzerausrüstung, wobei der physische Kanal einen physischen Abwärtsverbindungskanal und/oder einen fraktionalen physischen Abwärtsverbindungskanal und/oder einen dedizierten physischen Datenkanal und/oder einen fraktionalen dedizierten physischen Kanal umfasst, wobei das Berechnen der Variation des Kanalparameters zwischen dem Zeitpunkt, wenn der CQI-Wert gesendet wird, und dem Zeitpunkt, wenn der CQI-Wert verwendet wird, Folgendes umfasst:

Berechnen einer Leistungsvariation des physischen Kanals, wobei die Variation eine Differenz zwischen einer Leistung des physischen Kanals in einem ersten festgelegten Zustand zu einem Zeitpunkt, wenn der CQI-Wert empfangen wird, und einer Leistung des physischen Kanals in einem zweiten festgelegten Zustand zu dem augenblicklichen Zeitpunkt ist; und
wobei das Kompensieren des empfangenen CQI-Wertes durch Verwenden der Variation, um zu ermöglichen, dass das Signal-Rausch-Verhältnis der Benutzerausrüstung zu dem Zielwert konvergiert, Folgendes umfasst:

Durchführen einer Datenübertragungszeitplanung gemäß einer Summe des empfangenen CQI-Wertes und der Variation.

2. Verfahren nach Anspruch 1, wobei:

die Leistung des physischen Kanals in dem ersten festgelegten Zustand zu dem Zeitpunkt, wenn der CQI-Wert empfangen wird, eine Leistung des physischen Kanals zu einem Zeitpunkt, der um eine erste festgelegte Zeit früher als der Zeitpunkt ist, wenn der CQI-Wert empfangen wird, oder einen Durchschnittsleistungswert des physischen Kanals innerhalb einer zweiten festgelegten Zeit vor dem Zeitpunkt, wenn der CQI-Wert empfangen wird, umfasst; und
die Leistung des physischen Kanals in dem zweiten festgelegten Zustand zu dem augenblicklichen Zeitpunkt einen Durchschnittsleistungswert des physischen Kanals innerhalb einer Dauer zwischen einem Zeitpunkt, der um eine dritte festgelegte Zeit früher als der augenblickliche Zeitpunkt ist, und dem augenblicklichen Zeitpunkt umfasst.

3. Verfahren nach Anspruch 1 oder 2, wobei das Verfahren nach dem Empfangen des Kanalqualitätsindikator- bzw. CQI-Wertes (CQI: Channel Quality Indicator), der durch die Benutzerausrüstung gesendet wird, ferner Folgendes umfasst:

Erhalten eines Abweichungswertes, der dem empfangenen CQI-Wert entspricht, wobei ein definierter CQI-Wert als ein Bezugspunkt verwendet wird, wobei ein CQI-Wert größer als der Bezugspunkt einem positiven Abweichungswert entspricht und ein CQI-Wert kleiner als der Bezugspunkt einem negativen Abweichungswert entspricht; und
wobei das Durchführen einer Datenübertragungszeitplanung gemäß der Summe des empfangenen CQI-Wertes und der Variation Folgendes umfasst:

Durchführen einer Datenübertragungszeitplanung gemäß einer Summe des empfangenen CQI-Wertes, der Variation und dem Abweichungswert.

4. Einrichtung zum Verarbeiten einer Kanalqualität, die Folgendes umfasst:

eine Empfangseinheit (501), die zum Empfangen eines Kanalqualitätsindikator- bzw. CQI-Wertes (CQI: Channel Quality Indicator), der durch eine Benutzerausrüstung gesendet wird, konfiguriert ist, und
eine Kompensationseinheit (502), die zum Kompensieren des empfangenen CQI-Wertes durch Verwenden eines Kanalparameters, der mit der Kanalqualität der Benutzerausrüstung in Verbindung steht, um zu ermöglichen, dass ein Signal-Rausch-Verhältnis eines Kanals der Benutzerausrüstung zu einem Zielwert konvergiert, konfiguriert ist, wobei die Kompensationseinheit (502) Folgendes umfasst:

eine Parametererhalteeinheit (5021), die zum Erhalten des Kanalparameters, der mit der Kanalqualität der Benutzerausrüstung in Verbindung steht, konfiguriert ist;
eine Berechnungseinheit (5022), die zum Berechnen einer Variation des Kanalparameters zwischen einem Zeitpunkt, wenn der CQI-Wert gesendet wird, und
einem augenblicklichen Zeitpunkt, wenn der CQI-Wert verwendet wird, konfiguriert ist; und
eine Kompensationsuntereinheit (5023), die zum Kompensieren des empfangenen CQI-Wertes durch Verwenden der Variation, um zu ermöglichen, dass das Signal-Rausch-Verhältnis der Benutzerausrüstung zu dem Zielwert konvergiert, konfiguriert ist, wobei
die Parametererhalteeinheit (5021) speziell zum Erhalten einer Leistung eines physischen Kanals der Benutzerausrüstung konfiguriert ist, wobei der physische Kanal einen physischen Abwärtsverbindungskanal und/oder einen fraktionalen physischen Abwärtsverbindungskanal und/oder einen dedizierten physischen Datenkanal und/oder einen fraktionalen dedizierten physischen Kanal umfasst, wobei
die Berechnungseinheit (5022) speziell zum Berechnen einer Leistungsvariation des physischen Kanals konfiguriert ist, wobei die Variation eine Differenz zwischen einer Leistung des physischen Kanals in einem ersten festgelegten Zustand zu einem Zeitpunkt, wenn der CQI-Wert empfangen wird, und einer Leistung des physischen Kanals in einem zweiten festgelegten Zustand zu dem augenblicklichen Zeitpunkt ist; und
die Kompensationsuntereinheit (5023) speziell zum Durchführen einer Datenübertragungszeitplanung gemäß einer Summe des empfangenen CQI-Wertes und der Variation konfiguriert ist.

5. Einrichtung nach Anspruch 4, wobei
die Leistung des physischen Kanals in dem ersten festgelegten Zustand zu dem Zeitpunkt, wenn der CQI-Wert empfangen wird, eine Leistung des physischen Kanals zu einem Zeitpunkt, der um eine erste festgelegte Zeit früher als der Zeitpunkt ist, wenn der CQI-Wert empfangen wird, oder einen Durchschnittsleistungswert des physischen Kanals innerhalb einer zweiten festgelegten Zeit vor dem Zeitpunkt, wenn der CQI-Wert empfangen wird, umfasst; und
die Leistung des physischen Kanals in dem zweiten festgelegten Zustand zu dem augenblicklichen Zeitpunkt einen Durchschnittsleistungswert des physischen Kanals innerhalb einer Dauer zwischen einem Zeitpunkt, der um eine dritte festgelegte Zeit früher als der augenblickliche Zeitpunkt ist, und dem augenblicklichen Zeitpunkt umfasst.

6. Einrichtung nach Anspruch 4 oder 5, die ferner Folgendes umfasst:

eine Abweichungswerterhalteeinheit (701), die zum Erhalten eines Abweichungswertes, der dem empfangenen CQI-Wert entspricht, nachdem der Kanalqualitätsindikator- bzw. CQI-Wert (CQI: Channel Quality Indicator), der durch die Benutzerausrüstung gesendet wurde, empfangen wird, konfiguriert ist, wobei ein definierter CQI-Wert als ein Bezugspunkt verwendet wird, wobei ein CQI-Wert größer als der Bezugspunkt einem positiven Abweichungswert entspricht und ein CQI-Wert kleiner als der Bezugspunkt einem negativen Abweichungswert entspricht; wobei:

die Kompensationsuntereinheit (5023) speziell zum Durchführen einer Datenübertragungszeitplanung gemäß einer Summe des empfangenen CQI-Wertes, der Variation und dem Abweichungswert konfiguriert ist.

7. Computerlesbares Medium, das ein in einem nichtflüchtigen Medium gespeichertes Computerprogramm umfasst, das, wenn es durch eine Computereinheit ausgeführt wird, bewirkt, dass die Computereinheit die Schritte einer Maschine nach einem der Ansprüche 1 bis 3 durchführt.

**Revendications**

1. Procédé de traitement de qualité de canal comprenant les étapes consistant à :

recevoir (101) une valeur d'indicateur de qualité de canal, CQI, envoyée par un équipement utilisateur, et compenser (102) la valeur CQI reçue à l'aide d'un paramètre de canal lié à la qualité de canal de l'équipement utilisateur, pour permettre à un rapport de bruit de signal d'un canal de l'équipement utilisateur de converger à une valeur cible, dans lequel la compensation de la valeur CQI reçue à l'aide du paramètre de canal lié à la qualité de canal de l'équipement utilisateur, pour permettre au rapport de bruit de signal de l'équipement utilisateur de converger à la valeur cible, comprend les étapes consistant à:

obtenir le paramètre de canal lié à la qualité de canal de l'équipement utilisateur ;
calculer une variation du paramètre de canal entre un moment où la valeur CQI est envoyée et un moment actuel où la valeur CQI est utilisée ; et
compenser la valeur CQI reçue à l'aide de la variation, pour permettre au rapport de bruit de signal de l'équipement utilisateur de converger à la valeur cible, dans lequel l'obtention du paramètre de canal lié à la qualité de canal de l'équipement utilisateur consiste à :

obtenir une puissance d'un canal physique de l'équipement utilisateur, dans lequel le canal physique comprend au moins un élément parmi un canal physique en liaison descendante, un canal physique en liaison descendante fractionnaire, un canal de données physique dédié, et un canal physique dédié fractionnaire, dans lequel le calcul de la variation du paramètre de canal entre le moment où la valeur CQI est envoyée et le moment où la valeur CQI est utilisée consiste à :

calculer une variation de puissance du canal physique, dans lequel la variation est une différence entre une puissance du canal physique dans une première condition définie à un moment où la valeur CQI est reçue et une puissance du canal physique dans une seconde condition définie à un moment actuel ; et
la compensation de la valeur CQI reçue à l'aide de la variation, pour permettre au rapport de bruit de signal de l'équipement utilisateur de converger à la valeur cible consiste à :

exécuter un ordonnancement de transmission de données en fonction d'une somme de la valeur CQI reçue et de la variation.

2. Procédé selon la revendication 1, dans lequel
la puissance du canal physique dans la première condition définie au moment où la valeur CQI est reçue comprend une puissance du canal physique à un moment qui se situe avant le moment où la valeur CQI est reçue selon un premier temps défini, ou une valeur de puissance moyenne du canal physique dans un second temps défini avant le moment où la valeur CQI est reçue ; et
la puissance du canal physique dans la seconde condition définie au moment actuel comprend une valeur de puissance moyenne du canal physique dans une période entre un moment qui se situe avant le moment actuel selon un troisième temps défini et le moment actuel.

3. Procédé selon la revendication 1 ou 2, dans lequel après la réception de la valeur d'indicateur de qualité de canal, CQI, envoyée par l'équipement utilisateur, le procédé comprend en outre les étapes consistant à :

obtenir une valeur de déviation correspondant à la valeur CQI reçue, dans lequel une valeur CQI définie est utilisée en tant que référence, dans lequel une valeur CQI plus importante que la référence correspond à une valeur de déviation positive et une valeur CQI plus petite que la référence correspond à une valeur de déviation négative ; et

l'exécution de l'ordonnancement de transmission de données en fonction de la somme de la valeur CQI reçue et de la variation consiste à :

exécuter un ordonnancement de transmission de données en fonction d'une somme de la valeur CQI reçue, de la variation, et de la valeur de la déviation.

4.  Appareil de traitement d'une qualité de canal comprenant :

une unité de réception (501), conçue pour recevoir une valeur d'indicateur de qualité de canal, CQI, envoyée par un équipement utilisateur, et
une unité de compensation (502), conçue pour compenser la valeur CQI reçue à l'aide d'un paramètre de canal lié à la qualité de canal de l'équipement utilisateur, pour permettre à un rapport de bruit de signal d'un canal de l'équipement utilisateur de converger à une valeur cible, dans lequel l'unité de compensation (502) comprend :

une unité d'obtention de paramètres (5021), conçue pour obtenir le paramètre de canal lié à la qualité de canal de l'équipement utilisateur ;
une unité de calcul (5022), conçue pour calculer une variation du paramètre de canal entre un moment où la valeur CQI est envoyée et un moment actuel où la valeur CQI est utilisée ; et
une sous-unité de compensation (5023), conçue pour compenser la valeur CQI reçue à l'aide de la variation, pour permettre au rapport de bruit de signal de l'équipement utilisateur de converger à la valeur cible, dans lequel

l'unité d'obtention de paramètres (5021) est conçue spécifiquement pour obtenir une puissance d'un canal physique de l'équipement utilisateur, dans lequel le canal physique comprend au moins un élément parmi un canal physique en liaison descendante, un canal physique en liaison descendante fractionnaire, un canal de données physique dédié, et un canal physique dédié fractionnaire, dans lequel l'unité de calcul (5022) est conçue spécifiquement pour calculer une variation de puissance du canal physique, dans lequel la variation est une différence entre une puissance du canal physique dans une première condition définie à un moment où la valeur CQI est reçue et une puissance du canal physique dans une seconde condition définie au moment actuel ; et
la sous-unité de compensation (5023) est spécifiquement conçue pour exécuter un ordonnancement de transmission de données en fonction d'une somme de la valeur CQI reçue et de la variation.

5.  Appareil selon la revendication 4, dans lequel
la puissance du canal physique dans la première condition définie au moment où la valeur CQI est reçue comprend une puissance du canal physique à un moment qui se situe avant le moment où la valeur CQI est reçue selon un premier temps défini, ou une valeur de puissance moyenne du canal physique dans un second temps défini avant le moment où la valeur CQI est reçue ; et
la puissance du canal physique dans la seconde condition définie au moment actuel comprend une valeur de puissance moyenne du canal physique dans une période entre un moment qui se situe avant le moment actuel selon un troisième temps défini et le moment actuel.

6.  Appareil selon la revendication 4 ou 5, comprenant en outre :

une unité d'obtention de valeur de déviation (701), conçue pour, après la réception de la valeur d'indicateur de qualité de canal, CQI, envoyée par l'équipement utilisateur, obtenir une valeur de déviation correspondant à la valeur CQI reçue, dans lequel une valeur CQI définie est utilisée en tant que référence, dans lequel une valeur CQI plus importante que la référence correspond à une valeur de déviation positive et une valeur CQI plus petite que la référence correspond à une valeur de déviation négative ; dans lequel :

la sous-unité de compensation (5023) est spécifiquement conçue pour exécuter un ordonnancement de transmission de données en fonction d'une somme de la valeur CQI reçue, de la variation et de la valeur de la déviation.

7.  Support lisible par ordinateur comprenant un programme informatique stocké sur un support non transitoire qui, lorsqu'il est exécuté par une unité informatique, amènera l'unité informatique à exécuter les étapes d'une machine selon l'une quelconque des revendications 1 à 3.

101

Receive a channel quality indicator CQI value sent by a user equipment

102

Compensate the received CQI value by using a channel parameter related to channel quality of the user equipment, so that a signal noise ratio of a channel of the user equipment converges at a target value

FIG. 1

201 Downlink: high speed shared control channel (HS-SCCH)

High speed physical data shared channel (HS-PDSCH)

Downlink: downlink physical channel (DPCH)

Fractional downlink physical channel (F-DPCH)

Uplink: high speed dedicated physical control channel (HS-DPCCH)

Physical control channel (HS-DPCCH)

202

User equipment

Access network element

FIG. 2

301

Record a transmit power of a downlink physical channel DPCH/fractional downlink physical channel F-DPCH in each timeslot

302

Receive a CQI value reported by the UE, and compute a DPCH/F-DPCH transmit power (Pdpch-1) at an xth time slice before the CQI value is reported

303

Record a DPCH/F-DPCH transmit power (Pdpch-2) at a current moment

304

Calculate a difference between Pdpch-1 and Pdpch-2

305

Calculate a compensated CQI value

FIG. 3

$P_{dpch-1}$

Report a channel quality indicator (CQI)

$P_{dpch-2}$

Use CQI

Report CQI

x

t1

t2

FIG. 4

501

502

Receiving unit

Compensating unit

FIG. 5

501

502

5021

Receiving unit

Parameter obtaining unit

5022

Calculating unit

5023

Compensating subunit

Compensating unit

FIG. 6

501

502

5021

Receiving unit

Parameter obtaining unit

5022

Calculating unit

701

5023

Deviation value obtaining unit

Compensating subunit

Compensating unit

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011000420 A1